# EUROPEAN PATENT APPLICATION

(11) **EP 3 936 305 A1**
(43) Date of publication of application: **12.01.2022**
(21) Application number: 20917868.0
(22) Date of filing: 05.02.2020
(51) Int. Cl.: B29C 63/02

(54) **SCREEN FILM APPLYING DEVICE**

(71) Applicant: Shenzhen B2 Technology Co., Ltd., Guangming Dist Shenzhen, Guangdong 518000 (CN)
(72) Inventor: SHI, Hongbing, Shenzhen, Guangdong 518000 (CN)
(74) Representative: Prüfer & Partner mbB Patentanwälte · Rechtsanwälte
(86) International application number: PCT/CN2020/074337
(87) International publication number: WO 2021/155510

(57) **Abstract**

The present application discloses a screen film pasting device, including a base (11) and a top cover (12); a top of the base is provided with first accommodation grooves (111) configured to accommodate various types of mobile terminals; a top surface of the base is provided with a clamp (112) configured to fix a self-adhesive anti-wrinkle sticker; the first accommodation groove is provided with a fastening member (113) configured to adjust a relative position between a mobile terminal and a protection film; one end of the top cover is hinged to one end of the base, a middle of the top cover is provided with oppositely arranged refuge holes (121), and a position of each refuge hole corresponds to a position of the first accommodation groove , the top cover is provided with a trimming piece (122) retained in the refuge hole and configured to move along a length direction of the refuge hole to drive out air between the protection film and a screen of the mobile terminal. The screen film pasting device in the present application has solved the technical problems that screen film pasting device can only be applicable to one type of mobile terminal and protection film needs to be positioned manually in a protection film pasting process.

## Description

### TECHNICAL FIELD

The present application belongs to the technical field of accessories of mobile terminals, and particularly relates to a screen film pasting device.

### BACKGROUND

With the development of technology and the improvement of life level, mobile terminals (e.g., cell phones, tablets, e-books, etc.) are more and more frequently used by people. In order to protect a screen of a mobile terminal, many users past a layer of protection film on the screen of the mobile terminal, for example, the screen of the mobile phone is pasted with a tempered glass screen film or an explosion-proof film so as to be avoided from being scraped, broken or squeezed; furthermore, in order to protect eyesight of a user, the screen of the mobile terminal is pasted with an anti-blue protection film, or the like; furthermore, in order to protect the privacy of the user, the screen of the mobile terminal is pasted with an anti-peeping protection film.

At present, film pasting methods mainly rely on manual operation; however, problems such as misalignment between the protection film and the screen of the mobile phone, multiple bubbles, and easily formed dirt are prone to occur due to manual pasting. In order to solve the above-mentioned problems, various film-pasting auxiliary devices have been invented. Regarding the existing screen film pasting devices, a positioning frame is usually used to fix the mobile phone and expose a film pasting area, then, a film is positioned on the screen of the mobile phone so as to be pasted. However, this film pasting auxiliary device has the disadvantages that it can only be suitable for one type of mobile terminal, and larger error occurs when the protection film is manually positioned, a low screen protection film pasting efficiency is caused.

### TECHNICAL PROBLEM

An objective of the present application is to provide a screen film pasting device, which aims at solving the technical problems including but are not limited to the problems that the screen film pasting devices can only be suitable for one type of mobile terminal and protection film needs to be manually positioned in a film pasting process.

### TECHNICAL SOLUTION

In order to solve the aforementioned technical problems, the technical solutions adopted in the embodiments of the present application are as follows:
a screen film pasting device is provided, the screen film pasting device includes:
a base, a top of the base is provided with a first accommodation groove configured to accommodate various types of mobile terminals; a top surface of the base is provided with a clamp configured to fix a self-adhesive anti-wrinkle sticker; the first accommodation groove is provided with a fastening member configured to adjust a relative position between a mobile terminal and a protection film; and
a top cover, one end of the top cover is hinged to one end of the base, a middle of the top cover is provided with oppositely arranged refuge holes, and a position of each refuge hole corresponds to a position of the first accommodation groove, the top cover is provided with a trimming piece retained in the refuge hole and configured to move along a length direction of the refuge hole to drive out air between the protection film and a screen of the mobile terminal.

In one embodiment, a bottom of the first accommodation groove is provided with a first guide slot and a second guide slot arranged in parallel and spaced apart from each other, length directions of the first guide slot and the second guide slot are perpendicular to a length direction of the first accommodation groove, groove walls of the two oppositely arranged fist accommodation grooves are provided with two third guide slots, and a length direction of each of the two third guide slots is coincident with the length direction of the first accommodation groove, the first guide slot, the second guide slot and the third guide slots are sequentially distributed from one side adjacent to the clamp to one side facing away from the clamp; the fastening member comprises:
a first stop piece, a bottom of the first stop piece is retained in the first guide slot, and the first stop piece is configured to stop one of two side edges of the mobile terminal;
a second stop piece, a bottom of the second stop piece is retained in the second guide slot, and the second stop piece is configured to stop the other of the two side edges of the mobile terminal; and
a third stop piece, two opposite ends of the third stop piece are respectively retained in the two third guide slots, and the third stop piece is configured to stop a bottom side edge or a top side edge of the mobile terminal.

In one embodiment, the first stop piece includes:
a first guide part received in the first guide slot; and
a first stop part secured on a top surface of the first guide part and exposed of the first guiding groove, a length direction of the first stop part is coincident with the length direction of the first accommodation groove;
the second stop piece includes:
   a second guide part received the second guide slot; and
   a second stop part secured on the top surface of the second guide part and exposed of the second guiding groove, a length direction of the second stop part is coincident with the length direction of the first accommodation groove.

In one embodiment, the third stop piece includes:
a third stop part, two opposite ends of the third stop part are respectively retained in the two third guide slots, and a middle of the third stop part is provided with a second accommodation groove configured to accommodate the bottom side edge or the top side edge of the mobile terminal; and
a first force-exerting part disposed at the middle of the third stopping portion and extending in a direction away from the second accommodation groove.

In one embodiment, a groove wall of the first accommodation groove corresponding to the first force-exerting part is provided with a third accommodation groove configured to accommodate the first force-exerting part.

In one embodiment, a bottom surface of the first accommodation groove is provided with a first buffer layer located between the first guide slot and the second guide slot.

In one embodiment, a bottom of the first accommodation groove is provided with a boss, the first stop piece and the second stop piece are connected onto the boss in a slidable manner, and the third stop piece is located at an outer side of the boss.

In one embodiment, a bottom of the top cover is provided with a refuge groove configured to accommodate the clamp, the clamp includes:
two clamping pieces respectively hinged to the top surface of the base, one clamping piece is provided with positioning protrusions configured to penetrate through positioning holes of the self-self-adhesive anti-wrinkle sticker, and the other clamping piece is provided with positioning grooves having an interference fit with the positioning protrusions.

In one embodiment, groove walls of the two oppositely arranged refuge holes are provided with two fourth guide slots respectively, and a length direction of each of the two fourth guide slots are coincident with a length direction of each of the refuge holes; the trimming piece includes:
a second force-exerting part, two opposite ends of the second force-exerting part are respectively retained in the two fourth guide slots; and
a trimming part arranged below the second force-exerting part and configured to perform a reciprocation movement on the screen of the mobile terminal along the length direction of the refuge hole under the action of the second force-exerting part.

In one embodiment, either the top surface of the base or the bottom surface of the top cover is provided with a second buffer layer.

### ADVANTAGEOUS EFFECTS

The advantageous effects of the embodiments of the present application are described below:
the clamp and the fastening member are used to match with the trimming piece, such that various types of mobile terminals can be accommodated in the first accommodation groove, the protection film can be fixed by the clamp without the use of the self-adhesive anti-wrinkle sticker, there is no need to manually position the protection film, so that the technical problems that the screen protection film pasting device can only be suitable for one type of mobile terminal and the protection film needs to be manually positioned in film pasting process are solved; furthermore, the relative position between the screen of the mobile terminal and the protection film can be adjusted quickly through the fastening member, the protection film can be pressed on the screen of the mobile terminal and the air between the protection film and the screen of the mobile terminal can be driven out through the trimming piece, in this way, both the screen protection film pasting efficiency and the quality of pasted protection film are effectively improved.

### BRIEF DESCRIPTION OF THE DRAWINGS

In order to describe the embodiments of the present application more clearly, a brief introduction regarding the accompanying drawings that need to be used for describing the embodiments or exemplary technology is given below; it is apparent that the accompanying drawings described below are merely some embodiments of the present application, the person of ordinary skill in the art may also acquire other drawings according to the current drawings without paying creative labor.
Fig. 1 illustrates a schematic perspective view of a screen film pasting device in a folded state provided by one embodiment of the present application;
Fig. 2 illustrates a schematic front elevation view of the screen film pasting device in the folded state provided by one embodiment of the present application;
Fig. 3 illustrates a schematic front elevation view of the screen film pasting device in an unfolded state provided by one embodiment of the present application;
Fig. 4 illustrates a schematic disassembled view of one part of the screen film pasting device provided by one embodiment of the present application; and
Fig. 5 illustrates a schematic view of a state of combination of the self-adhesive anti-wrinkle sticker and the protection film provided by one embodiment of the present application.

Wherein, in the figures:
1-screen film pasting device, 2-self-adhesive anti-wrinkle sticker; 3-protection film; 11-base; 12-top cover, 20-positioning hole; 111-first accommodation groove; 112-clamp, 113-fastening member, 114-first guide slot, 115-second guide slot, 116-third guide slot, 117-third accommodation groove, 118-boss, 119-first buffer layer, 120-second buffer layer, 121-refuge hole, 122-trimming piece, 123-fourth guide slot, 124- refuge groove, 1121-clamping piece, 1122-positioning protrude, 1131-first stop piece, 1132-second stop piece, 1133-third stop piece, 1221-second force-exerting part, 1222-trimming part, 11311-first guide part, 11312-first stop part, 11321-second guide part, 11322-second stop part, 11331-third stop part, 11332-first force-exerting part, 11333-second accommodation groove.

### DESCRIPTION OF THE EMBODIMENTS OF THE PRESENT INVENTION

In order to make the purpose, the technical solution and the advantages of the present application be clearer and more understandable, the present application will be further described in detail below with reference to accompanying figures and embodiments. It should be appreciated that the specific embodiments described herein are merely intended to illustrate but not to limit the present application.

It needs to be noted that, when one component is described to be "fixed to" or "arranged on" another component, this component may be directly or indirectly arranged on another component. When it is described that one component "is connected with" another component, this component may be directly or indirectly connected to the another component. Orientation or position relationships indicated by terms including "upper", "lower", "left" and "right" are based on the orientation or position relationships shown in the accompanying figures and is only used for the convenience of description, instead of indicating or implying that the indicated device or element must have a specific orientation and is constructed and operated in a particular orientation, and thus should not be interpreted as limitation to the present application. For the person of ordinary skill in the art, the specific meanings of the aforesaid terms may be interpreted according to specific conditions. Terms of "the first" and "the second" are only for the purpose of describing conveniently and should not be interpreted as indicating or implying relative importance or implicitly indicating the number of indicated technical features. "Multiple/a plurality of" means two or more unless there is an additional explicit and specific limitation.

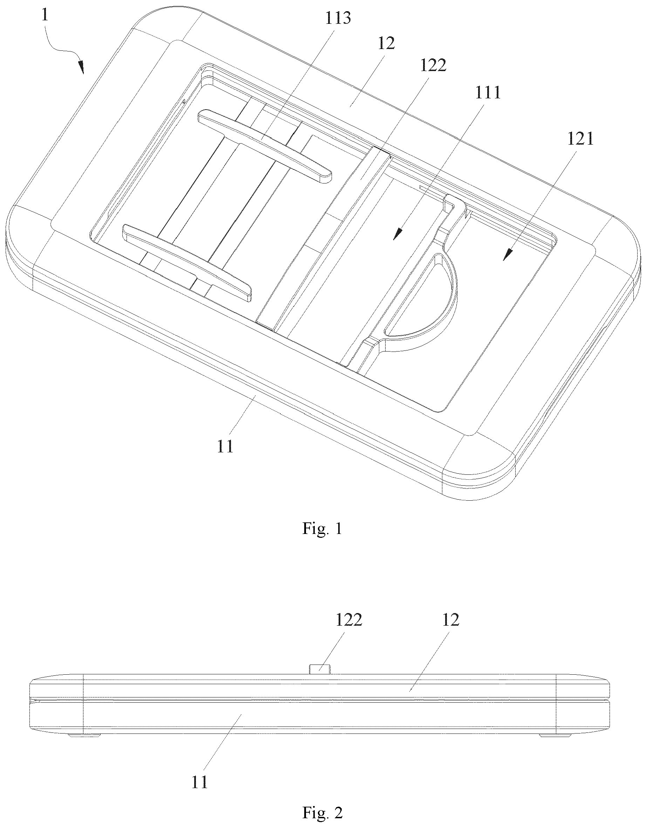

In order to explain the technical solutions of the present application, the technical solutions are described in detail below with reference to the specific accompanying figures and the embodiments:
referring to Figs. 1-3 and Fig. 5, a screen film pasting device 1 provided by according to the present application includes a base 11 and a top cover 12, wherein, a top of the base 11 is provided with a first accommodation groove 111 configured to accommodate a mobile terminal, a top surface of the base 11 is provided with a clamp 112 configured to fix a self-adhesive anti-wrinkle sticker 2, the first accommodation groove 111 is provided with a fastening member 113 configured to adjust a relative position between the mobile terminal and the protection film 3, one end of the top cover 12 is hinged to one end of the base 11, the middle of the top cover 12 is provided with refuge holes 121, and the position of each refuge hole 121 corresponds to the position of the first accommodation groove 111, that is, after the screen film pasting device 1 is folded, projections of the refuge holes 121 on the base 11 are overlapped with the first accommodation groove 111, furthermore, the top cover 12 is provided with a trimming piece 122, and the trimming piece 122 is retained in the refuge hole 121 and is configured to move along a length direction of the refuge hole 121 to drive out air between the protection film 3 and the screen of the mobile terminal.

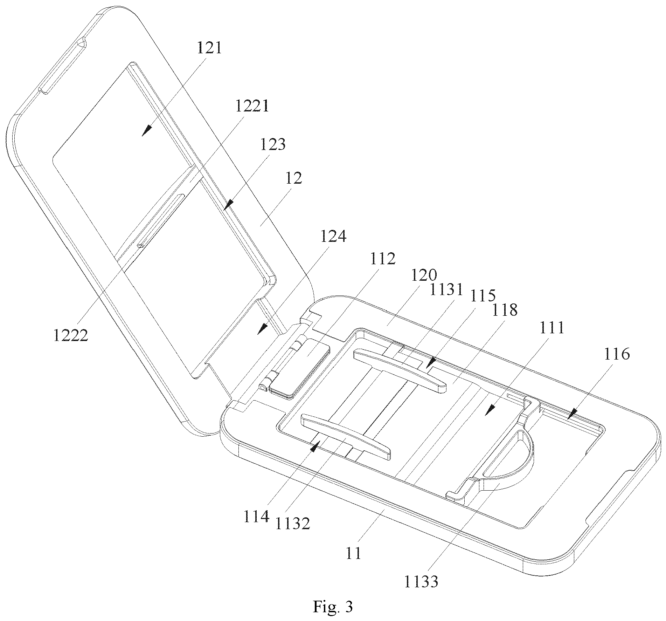

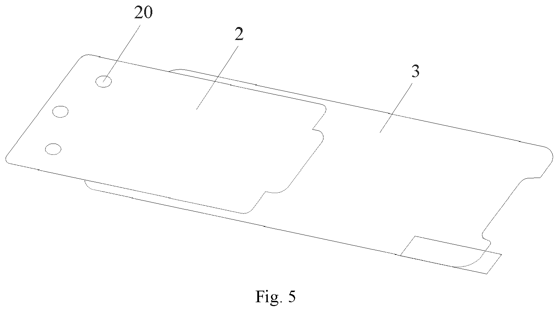

When a protection film needs to be pasted on the screen of the mobile terminal, as shown in Fig. 3, the top cover 12 is unfolded first and the mobile terminal is placed in the first accommodation groove 111, then, the self-adhesive anti-wrinkle sticker 2 is fixed on the clamp 112 and the protection film 3 is attached on the self-adhesive anti-wrinkle sticker 2 (as shown in Fig. 5), then, the fastening member 113 is utilized to drive the mobile terminal to make a translational movement in the first accommodation groove 111 until the screen of the mobile terminal is aligned with the protection film 3, then, a first dust-proof film of the protection film 3 that faces one side surface of the mobile terminal is torn off, the protection film 3 is then attached on the screen of the mobile terminal, the top cover 12 is then covered on the top surface of the base 11 to allow the trimming piece 122 to press the protection film 3 against the screen of the mobile terminal, then, the trimming piece 122 is driven to make a translational movement reciprocally along a length direction of the refuge hole 121, thereby tightly attaching the protection film 3 on the screen of the mobile terminal and driving out air between the protection film 3 and the screen of the mobile terminal, then, the top cover 12 is unfolded and a second dust-proof film of the protection film 3 facing away from one side surface of the mobile terminal is torn off, such that pasting protection film on the screen of the mobile terminal can be completed.

In the screen film pasting device 1 provided by the present application, the clamp 112 and the fastening member 113 are used to match with the trimming piece 122, so that various types of mobile terminals can be received in the first accommodation groove 111, the protection film 3 can be fixed by the clamp 112 without using the self-adhesive anti-wrinkle sticker 2, there is no need to manually position the protection film 3, so that the technical problems that the protection film pasting device can only be suitable for one type of mobile terminal and the protection film needs to be manually positioned in a protection film pasting process are solved, furthermore, the relative position between the screen of the mobile terminal and the protection film 3 can be adjusted quickly through the fastening member 113, and the trimming piece 122 can be used to press the protection film on the screen of the mobile terminal and drive out the air between the protection film 3 and the screen of the mobile terminal, so that both the screen protection film pasting efficiency and the quality of pasted screen protection film are effectively improved.

Optionally, referring to Fig. 3, as one specific embodiment of the screen film pasting device provided by the present application, the bottom of the first accommodation groove 111 is provided with a first guide slot 114 and a second guide slot 115, the first guide slot 114 and the second guide slot 115 are arranged in parallel and are spaced apart from each other, and a length direction of the first guide slot 114 and a length direction of the second guide slot 115 are perpendicular to a length direction of the first accommodation groove 111, respectively; furthermore, groove walls of two symmetrically arranged first accommodation grooves 111 are provided with two third guide slots 116, the two third guide slots 116 are symmetrically arranged and a length direction of each third guide slot 116 is coincident with the length direction of each first accommodation groove 111. Here, the first guide slot 114, the second guide slot 115 and the third guide slot 116 are sequentially arranged from one side adjacent to the clamp 112 to one side facing away from the clamp 112; the fastening member 113 includes a first stop piece 1131, a second stop piece 1132, and a third stop piece 1133, wherein a bottom of the first stop piece 1131 is retained in the first guide slot 114 so as to stop the edge of one side of the mobile terminal, a bottom of the second stop piece 1132 is retained in the second guide slot 115 so as to stop the edge of the other side of the mobile terminal, and two opposite ends of the third stop piece 1133 are respectively retained in the two third guide slots 116 so as to stop a bottom side edge or a top side edge of the mobile terminal. Specifically, in the bottom of the first stop piece 1131 is slidably connected in the first guide slot 114, such that the first stop piece 1131 can make a translational movement reciprocally along the first guide slot 114 in a width direction of the first accommodation groove 111 under the action of external force, a bottom of the second stop piece 1132 is slidably connected within the second guide slot 115, such that the second stop piece 1132 can make a translational movement reciprocally along the second guide slot 115 in a width direction of the first accommodation groove 111 under the action of external force, two opposite ends of the third stop piece 1133 are slidably connected in the two third guide slots 116, such that the third stop piece 1133 can make a translational movement along the third guide slot 116 reciprocally in the length direction of the first accommodation groove 111 under the action of external force; in this embodiment, it is preferable that the first stop piece 1131 is in a damping connection with the first guide slot 114, the second stop piece 1132 is in a damping connection with the second guide slot 115, and the third stop piece 1133 is in a damping connection with the third guide slot 116, which enables the first stop piece 1131, the second stop piece 1132 and the third stop piece 1133 to have sufficient friction to fix the mobile terminal at the current position when the external force is removed. When a screen protection film needs to be pasted on the screen of the mobile terminal, since the volume of the first accommodation groove 111 is greater than the volume of the mobile terminal, after the mobile terminal is horizontally placed in the first accommodation groove 111, the first stop piece 1131 and the second stop piece 1132 need to be respectively abutted against the left side and the right side of the mobile terminal so as to push the mobile terminal to a position just below the protection film 3, then, the third stop piece 1133 needs to be abutted against the top side or the bottom side of the mobile terminal to secure the mobile terminal under the protection film 3 by matching with a groove wall of the first accommodation groove 111 adjacent to the clamp 112, such that a displacement of the mobile terminal in a screen film pasting process can be effectively avoided, and an objective of accurately pasting the protection film 3 on the screen of the mobile terminal is achieved, which facilitates improving the screen protection film pasting efficiency and the quality of the pasted protection film 3.

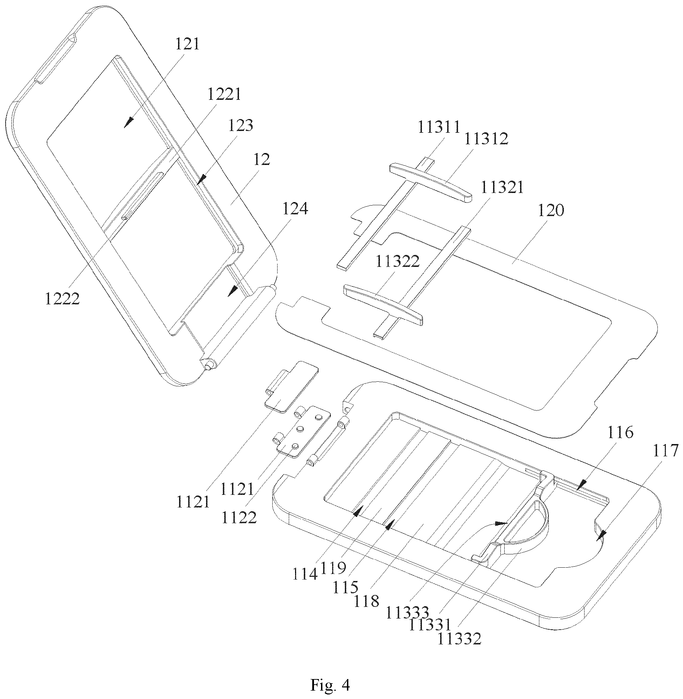

Optionally, referring to Fig. 4, as one specific embodiment of the screen film pasting device of the present application, the first stop piece 1131 includes a first guide part 11311 and a first stop part 11312, wherein the first guide part 11311 is received in the first guide slot 114, the first stop part 11312 is fixed on a top surface of the first guide part 11311 and is exposed of the first guide slot 114, and a length direction of the first stop part 11312 is coincident with the length direction of the first accommodation groove 111; furthermore, the second stop part 11321 includes a second guide part 11321 and a second stop part 11322, wherein the second stop part 11321 is received in the second guide slot 115, the second stop part 11322 is fixed on a top surface of the second guide part 11321 and is exposed of the second guide slot 115, and a length direction of the second stop part 11322 is coincident with the length direction of the first accommodation groove 111. Specifically, the length of the first guide part 11311 is shorter than the length of the first guide slot 114, and the length of the second guide part 11321 is shorter than the length of the second guide slot 115, according to this design, it is ensured that the first guide part 11311 has enough spacial translation within the first guide slot 114 and the second guide part 11321 has enough spacial translation within the second guide slot 115; the two opposite ends of the first stop part 11312 extend in two opposite directions respectively and across the first guide slot 114 and the second guide slot 115, the two opposite ends of the second stop part 11322 extend in two opposite directions respectively and across the first guide slot 114 and the second guide slot 115, according to this design, both the contact area between the first stop part 11312 and the mobile terminal and the contact area between the second stop part 11322 and the mobile terminal are effectively increased, such that the mobile terminal is more stable in the screen film pasting process.

Optionally, referring to Fig. 4, as one specific embodiment of the screen film pasting device provided by the present application, the third stop piece 1133 includes a third stop part 11331 and a first force-exerting part 11332, wherein the two opposite ends of the third stop part 11331 are respectively retained in the two third guide slots 116, a middle of the third stop part 11331 is provided with a second accommodation groove 11333 configured to receive a bottom side edge or a top side edge of the mobile terminal, the first force-exerting part 11332 is arranged in the middle of the third stop part 11331 and extends in a direction away from the second accommodation groove 11333. This structure facilitates improving the convenience of the user in manipulating the third stop piece 1133. Specifically, in a fixation process of the mobile terminal, the user can hold the first force-exerting part 11332 and apply a push force on the third stop part 11331, and drive the third stop part 11331 to make a translational movement in a direction adjacent to the clamp 112, until the mobile terminal is clamped just below the protection film 3.

Optionally, referring to Fig. 4, as one specific embodiment of the screen film pasting device provided by the present application, a groove wall of the first accommodation groove 111 corresponding to the first force-exerting part 11332 is provided with a third accommodation groove 117 configured to accommodate the first force-exerting part 11332. Specifically, the third accommodation groove 117 communicates with the first accommodation groove 111, and a profile shape of the third accommodation groove 117 matches a profile shape of the first force-exerting part 11332, that is, when the fastening member 113 has a maximum space for fastening by adjustment, the first force-exerting part 11332 of the third stop part 1133 can be completely received in the third accommodation groove 117, so that the mobile terminal can be provided with a maximum accommodation space.

Optionally, referring to Fig. 4, as one specific embodiment of the screen film pasting device provided by the present application, a bottom surface of the first accommodation groove 111 is provided with a first buffer layer 119 located between the first guide slot 114 and the second guide slot 115. Specifically, the first buffer layer 119 is a flexible EVA (Ethylene-Vinyl Acetate Copolymer) sheet configured to avoid the mobile terminal from rigidly contacting with the bottom of the first accommodation groove 111, the first buffer layer 119 can not only protect the frame of the mobile terminal from being collided or scratched, but also has an anti-skid function, thereby facilitates improving the stability of the mobile terminal during the screen protection film pasting process.

Optionally, referring to Fig. 3 and Fig. 4, as one specific embodiment of the screen film pasting device provided by the present application, the bottom of the first accommodation groove 111 is provided with a boss 119, the first stop piece 1131 and the second stop piece 1132 are connected onto the boss 119 in a slidable manner, and the third stop piece 1133 is located at the outer side of the boss 119. Specifically, the boss 119 protrudes upwards from the bottom of the first accommodation groove 111 and is adjacent to the clamp 112, that is, a height of the bottom surface of the first accommodation groove 111 adjacent to the clamp 112 is greater than a height of the bottom surface of the first accommodation groove 111 away from the clamp 112, such that a ramp is formed in a space between the second guide slot 115 and the third stop piece 1133, when the third stop piece 1133 is removed, a gap is formed between the bottom surface of the mobile terminal and the bottom surface of the first accommodation groove 111, so that the user can stretch his/her fingers into the gap to fetch the mobile terminal from the first accommodation groove 111 easily, the user is facilitated to take out the mobile terminal, and the effect of user experience is improved.

Alternatively, referring to Figs. 3-5, as one specific embodiment of the screen film pasting device provided by the present application, a bottom of the top cover 12 is provided with a refuge groove 124 configured to receive the clamp 112, according to this design of refuge groove 124, a tight closure between the top cover 12 and the base 11 can be ensured after the screen film pasting device is folded; in this embodiment, the clamp 112 includes two clamping pieces 1121, and the two clamping pieces 1121 are respectively hinged to the top surface of the base 11, one clamping piece 1121 is provided with multiple positioning protrusion(s) 1122 configured to pass through positioning holes 20 of the self-adhesive anti-wrinkle sticker 2, and the other clamping piece 1121 is provided with positioning grooves (not shown) that have an interference fit with the positioning protrusions 1122. Specifically, the number of the positioning protrusions 1122 and the number of positioning grooves are consistent with number of the positioning holes 20 of the self-adhesive anti-wrinkle sticker 2, and this number is equal to or greater than 2, according to this arrangement, the self-adhesive anti-wrinkle sticker 2 can be effectively prevented from being swung and displaced. When the self-adhesive anti-wrinkle sticker 2 needs to be assembled, first, the two clamping pieces 1121 are separated from each other, then, one end of the self-adhesive anti-wrinkle sticker 2 having the positioning holes 20 is placed on the surface of the clamping piece 1121 having the positioning protrusions 1122, and the positioning protrusions 1122 are allowed to pass through the positioning holes 20, then, the two clamping pieces 1121 are folded, the positioning protrusions 1122 insert into the positioning grooves, and the self-adhesive anti-wrinkle sticker 2 is clamped tightly, so that the self-adhesive anti-wrinkle sticker 2 is accurately fastened on the clamp 112.

Optionally, referring to Fig. 3 and Fig. 4, as one specific embodiment of the screen film pasting device provided by the present application, two fourth guide slots 123 are arranged on walls of the two oppositely arranged refuge holes 121, the fourth guide slots 123 are symmetrically arranged, and a length direction of each fourth guide slot 123 is coincident with a length direction of each refuge hole 121; a trimming piece 122 includes a second force-exerting part 1221 and a trimming part 1222, wherein two opposite ends of the second force-exerting part 1221 are respectively retained in the two fourth guide slots 123, and the trimming part 1222 is arranged at the bottom of the second force-exerting part 1221 and is configured to make a reciprocation movement on the screen of the mobile terminal along the length direction of the refuge hole 121 under the action of the second force-exerting part 1221. Specifically, a top of the second force-exerting part 1221 is protruded on a top side of the top cover 12 so as to be conveniently held by the user, thereby facilitating improving the effect of use experience; the trimming part 1222 can either be a scraping strip or be a roller, when the trimming part 1222 is the scraping strip, the trimming part 1222 is fixed on the bottom of the second force-exerting part 1221, when the trimming part 1222 is the roller, the trimming part 1222 is rotatably connected at the bottom of the second force-exerting part 1221, after the trimming part 1222 makes a reciprocation movement on the screen of the mobile terminal along the length direction of the refuge hole 121 under the action of the second force-exerting part 1221, the protection film 3 can be pressed on the screen of the mobile terminal tightly to drive out the air between the protection film 3 and the screen of the mobile terminal, so that the quality of the pasted screen protection film is effectively improved.

Optionally, referring to Figs. 3 and 4, as one specific embodiment of the screen film pasting device provided by the present application, the top surface of the base 11 or the bottom surface of the top cover 12 is provided with a second buffer layer 120, specifically, the second buffer layer 120 is a soft EVA (Ethylene Vinyl Acetate Copolymer) sheet which is configured to avoid the top cover 12 from rigidly contacting with the base 11 and has the function of reducing abrasion between the top cover 12 and the base 11, thus, noise is prevented when the screen pasting device 1 is folded, the effect of user experience is improved. When the second buffer layer 120 is arranged on the top surface of the base 11, the second buffer layer 120 covers all areas excluding a projection area of the clamp 112, so that the second buffer layer 120 is avoided from contacting with the clamp 112, and thus the top cover 12 and the base 11 can fit more perfectly when the screen film pasting device is folded; when the second buffer layer 120 is arranged on the bottom surface of the top cover 12, the second buffer layer 120 covers all areas excluding the refuge groove 124, so that the second buffer layer 120 is avoided from contacting with the refuge groove 124, and thus the cover 12 and the base 11 can fit more perfectly.

The foregoing are only some selectable embodiments of the present application, and should not be regarded as limitations to the present application. For the person of ordinary skill in the art, various modifications and changes can be made in the present application. Any modification, equivalent replacement, improvement, and the like, which are made within the spirit and the principle of the present application, should all be included in the protection scope of the claims of the present application.

## Claims

1. A screen film pasting device, **characterized in that**, the screen film pasting device comprises:
a base; wherein a top of the base is provided with first accommodation grooves configured to accommodate various types of mobile terminals; a top surface of the base is provided with a clamp configured to fix a self-adhesive anti-wrinkle sticker; the first accommodation groove is provided with a fastening member configured to adjust a relative position between a mobile terminal and a protection film; and
a top cover, wherein one end of the top cover is hinged to one end of the base, a middle of the top cover is provided with oppositely arranged refuge holes, and a position of each refuge hole corresponds to a position of the first accommodation groove, the top cover is provided with a trimming piece retained in the refuge hole and configured to move along a length direction of the refuge hole to drive out air between the protection film and a screen of the mobile terminal.

2. The screen film pasting device according to claim 1, **characterized in that**, a bottom of the first accommodation groove is provided with a first guide slot and a second guide slot arranged in parallel and spaced apart from each other, length directions of the first guide slot and the second guide slot are perpendicular to a length direction of the first accommodation groove, groove walls of the two oppositely arranged fist accommodation grooves are provided with two third guide slots, and a length direction of each of the two third guide slots is coincident with the length direction of the first accommodation groove, the first guide slot, the second guide slot and the third guide slots are sequentially distributed from one side adjacent to the clamp to one side facing away from the clamp; the fastening member comprises:
a first stop piece, a bottom of the first stop piece is retained in the first guide slot, and the first stop piece is configured to stop one of two side edges of the mobile terminal;
a second stop piece, a bottom of the second stop piece is retained in the second guide slot, and the second stop piece is configured to stop the other of the two side edges of the mobile terminal; and
a third stop piece, two opposite ends of the third stop piece are respectively retained in the two third guide slots, and the third stop piece is configured to stop a bottom side edge or a top side edge of the mobile terminal.

3. The screen film pasting device according to claim 2, **characterized in that**, the first stop piece comprises:
a first guide part received in the first guide slot; and
a first stop part secured on a top surface of the first guide part and exposed of the first guiding groove, a length direction of the first stop part is coincident with the length direction of the first accommodation groove;
the second stop piece comprises:
a second guide part received the second guide slot; and
a second stop part secured on the top surface of the second guide part and exposed of the second guiding groove, a length direction of the second stop part is coincident with the length direction of the first accommodation groove.

4. The screen film pasting device according to claim 2, **characterized in that**, the third stop piece comprises:
a third stop part, two opposite ends of the third stop part are respectively retained in the two third guide slots, and a middle of the third stop part is provided with a second accommodation groove configured to accommodate the bottom side edge or the top side edge of the mobile terminal; and
a first force-exerting part disposed at the middle of the third stopping portion and extending in a direction away from the second accommodation groove.

5. The screen film pasting device according to claim 4, **characterized in that**, a groove wall of the first accommodation groove corresponding to the first force-exerting part is provided with a third accommodation groove configured to accommodate the first force-exerting part.

6. The screen film pasting device according to claim 2, **characterized in that**, a bottom surface of the first accommodation groove is provided with a first buffer layer located between the first guide slot and the second guide slot.

7. The screen film pasting device according to claim 2, **characterized in that**, a bottom of the first accommodation groove is provided with a boss, the first stop piece and the second stop piece are connected onto the boss in a slidable manner, and the third stop piece is located at an outer side of the boss.

8. The screen film pasting device according to any one of claims 1 to 7, **characterized in that**, a bottom of the top cover is provided with a refuge groove configured to accommodate the clamp, the clamp comprises:
two clamping pieces respectively hinged to the top surface of the base, one clamping piece is provided with positioning protrusions configured to penetrate through positioning holes of the self-self-adhesive anti-wrinkle sticker, the other clamping piece is provided with positioning grooves having an interference fit with the positioning protrusions.

9. The screen film pasting device according to any one of claims 1 to 7, **characterized in that**, groove walls of the two oppositely arranged refuge holes are provided with two fourth guide slots respectively, and a length direction of each of the two fourth guide slots are coincident with a length direction of each of the refuge holes; the trimming piece comprises:
a second force-exerting part, wherein two opposite ends of the second force-exerting part are respectively retained in the two fourth guide slots; and
a trimming part arranged below the second force-exerting part and configured to perform a reciprocation movement on the screen of the mobile terminal along the length direction of the refuge hole under the action of the second force-exerting part.

10. The screen film pasting device according to any one of claims 1 to 7, **characterized in that**, either the top surface of the base or the bottom surface of the top cover is provided with a second buffer layer.
